# EUROPÄISCHE PATENTSCHRIFT

(11) **EP 2 105 240 B1**
(45) Veröffentlichungstag und Bekanntmachung des Hinweises auf die Patenterteilung: **05.10.2011**
(21) Anmeldenummer: 08006084.1
(22) Anmeldetag: 28.03.2008
(51) Int. Cl.: B23K 26/38, B23K 101/00

(54) **Verfahren zur Fertigung einer Bohrung**
Method for creating a drill hole
Procédé de percage d`un trou

(43) Veröffentlichungstag der Anmeldung: 30.09.2009
(73) Patentinhaber: SIEMENS AKTIENGESELLSCHAFT, 80333 München (DE)
(72) Erfinder: Bolms, Hans-Thomas, Dr., 45481 Mühlheim an der Ruhr (DE); Münzer, Jan, 10439 Berlin (DE); Podgorski, Thomas, 16565 Lehnitz (DE); Wolkers, Lutz, Dr., 14169 Berlin (DE)

(56) Entgegenhaltungen:
- EP-A- 1 806 203
- US-B1- 6 420 677

## Beschreibung

Die Erfindung betrifft ein Verfahren zur Fertigung einer Bohrung mit seitlich begrenzenden Flanken in einem Bauteil, bei dem ein Laserstrahl auf die Bauteiloberfläche gerichtet wird, so dass Bauteilmaterial verdampft und die Bohrung ausgebildet wird.

Verfahren zur Fertigung von Bohrungen mit seitlich begrenzenden Flanken sind im Stand der Technik bekannt. So ist beispielsweise in der US 6,420,677 ein Verfahren zur lasergestützten Ausbildung von Kühlluftbohrungen in Turbinenschaufeln beschrieben. Dabei ist vorgesehen, eine Folge von Laserpulsen auf die Oberfläche der Turbinenschaufel abzugeben, wobei Teile des Turbinenmaterials verdampft werden, so dass eine Bohrung entlang einer Z-Achse ausgebildet wird. Der Laserstrahl wird während der Bearbeitung um Winkel von +/-10-20° gegenüber der Z-Achse gekippt auf die Schaufeloberfläche abgegeben.

Bei der Fertigung der Kühlluftbohrungen kann es zu unzulässigen Wechselwirkungen zwischen dem Laserstrahl und der Flanke der Bohrung kommen. Eine derartige nachteilige Wechselwirkung tritt dann auf, wenn der Laserstrahl während der Bearbeitung so auf die Schaufeloberfläche gerichtet wird, dass er sich in einem Bereich nah zu und parallel mit der seitlichen Flanke erstreckt. Es kommt dann in diesem Bereich zwischen dem Laserstrahl und der Flanke zu einer Wechselwirkung, in deren Folge ein Teil der Energie des Laserstrahls von der Flanke absorbiert wird. Dies führt dazu, dass die Flanke der Bohrung beschädigt wird.

Es ist daher Aufgabe der vorliegenden Erfindung ein Verfahren der eingangs genannten Art anzugeben, bei dem keine Beschädigung der Bohrungsflanke durch Wechselwirkung mit dem Laserstrahl auftritt.

Diese Aufgabe wird erfindungsgemäß dadurch gelöst, dass in mehreren Fertigungsschritten jeweils ein Teilvolumen der Bohrung durch Abfahren einer seitlichen Flanke der Bohrung mit dem Laserstrahl ausgebildet wird, wobei der Laserstrahl so ausgerichtet wird, dass er mit der abgefahrenen Flanke einen Winkel von größer 8° einschließt.

Grundgedanke der Erfindung ist es somit, das Gesamtvolumen der zu fertigenden Bohrung in Teilvolumen aufzuteilen und diese in einzelnen Fertigungsschritten auszubilden. Das Bauteilmaterial der einzelnen Teilvolumina wird entfernt, indem jeweils eine seitliche Flanke der Bohrung mit dem Laserstrahl abgefahren wird. Dabei wird der Laserstrahl so ausgerichtet, dass er mit der abgefahrenen Flanke einen Winkel größer 8° einschließt.

Da der Laserstrahl während der Fertigung der Bohrung nicht nah zu und parallel mit der bereits ausgebildeten Flanke der Bohrung auf die Bauteiloberfläche gerichtet wird, ist ausgeschlossen, dass es zu einer unzulässigen Wechselwirkung zwischen dem Laserstrahl und der Flanke kommt. Weiterhin erlaubt die Aufteilung des Gesamtvolumens der Bohrung in mehrere Teilvolumina komplexe Bohrungsgeometrien auszubilden.

Gemäß einer ersten Ausführungsform der Erfindung ist vorgesehen, dass der Laserstrahl so ausgerichtet wird, dass er mit der abgefahrenen Flanke einen Winkel größer 10° und kleiner 90°, bevorzugt von größer 15° und kleiner 80° und besonders bevorzugt von größer 20° und kleiner 60° einschließt. Insbesondere bevorzugt ist ein Winkel von 9°.

In Weiterbildung der Erfindung ist vorgesehen, einen gepulsten Laserstrahl auf die Bauteil-Oberfläche zu richten. Dabei kann ein Laserstrahl mit variabler Pulsbreite verwendet werden. Die Pulsbreite kann im Bereich von 50 bis 800 ns, bevorzugt von 70 bis 600 ns und insbesondere von 200 bis 500 ns liegen. Besonders bevorzugt ist eine Pulsbreite von 400 ns. Mit einem solchen gepulsten Laserstrahl kann das Bauteilmaterial besonders schnell verdampft werden.

Vorteilhafter Weise kann auch ein Laserstrahl mit einer Frequenz im Bereich von 20 bis 40 kHz, bevorzugt von 25 bis 35 kHz und insbesondere von 28 bis 32 kHz auf die Bauteiloberfläche gerichtet werden.

Eine bevorzugte Weiterbildung der Erfindung sieht vor, eine Bohrung in einem Turbinenbauteil insbesondere in einer Turbinenschaufel zu fertigen. Bei der Bohrung kann es sich insbesondere um eine vollständige Kühlluftbohrung oder um eine Diffusoröffnung einer Kühlluftbohrung handeln.

Die Erfindung wird im Folgenden an Hand eines Ausführungsbeispiels unter Bezugnahme auf die Zeichnungen näher erläutert.

In den Zeichnungen zeigen:
- Figur 1: eine schematische Darstellung eines Bauteil in dem mit einem erfindungsgemäßen Verfahren eine Bohrung gefertigt werden soll
- Figur 2: eine schematische Darstellung des Bauteils der Figur 1 während der Fertigung eines ersten Teil- volumens der Bohrung,
- Figur 3: eine schematische Darstellung der Bauteils der Figur 1 während der Fertigung eines zweiten Teil- volumens der Bohrung und
- Figur 4: eine schematische Darstellung des Bauteils der Figur 1 in dem mit dem erfindungsgemäßen Verfahren eine Bohrung mit alternativer Form gefertigt werden soll.

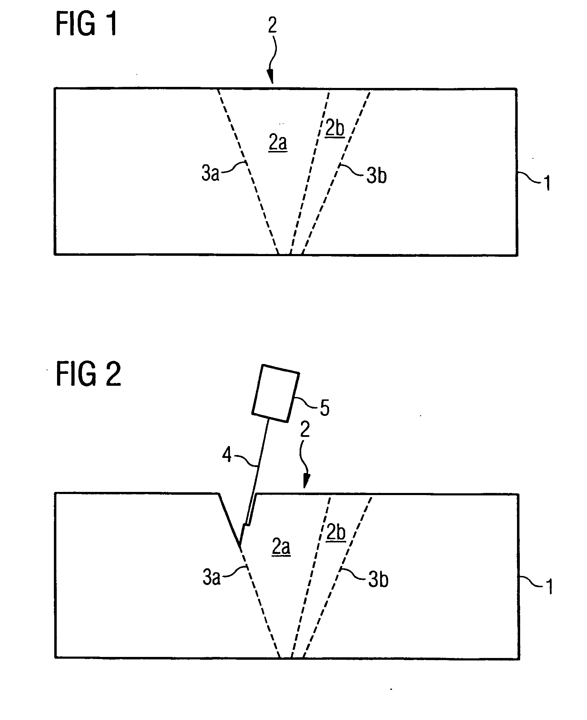

In den Figuren 1 bis 3 ist schematisch die Fertigung einer Bohrung 1 in einem Bauteil 2 dargestellt. Bei dem Bauteil 2 kann es sich insbesondere um eine Turbinenschaufel handeln, in der eine Kuhlluftbohrung ausgebildet wird.

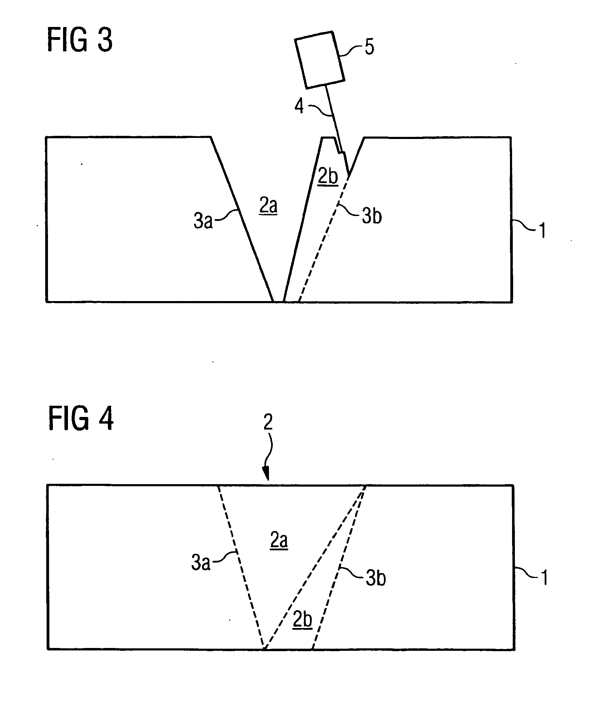

Die Figur 1 zeigt das Bauteil 1 vor Beginn des Verfahrens, wobei die die herzustellende Bohrung 2 rechts und links seitlich begrenzenden Flanken 3a und 3b mit gestrichelten Linien angedeutet sind. Ebenfalls mit einer gestrichelten Linie ist das Gesamtvolumen der zu fertigenden Bohrung 2 in ein linkes und ein rechtes Teilvolumen 2a und 2b unterteilt. Die Fertigung des rechten linken Teilvolumens 2a ist in der Figur 2 gezeigt und die Figur 3 illustriert die des rechten Teilvolumens 2b.

Um in einem ersten Fertigungsschritt das linke Teilvolumen 2a der Bohrung 2 in dem Bauteil 1 auszubilden, wird ein Laserstrahl 4 von einem Laser 5 auf die Bauteiloberfläche abgegeben. Dabei ist der Laser 5 so ausgerichtet, dass der Laserstrahl 4 mit der linken Flanke 3a einen Winkel größer 5° einschließt und zunächst auf den unmittelbar an die linke Flanke 3a angrenzenden Bereich des linken Teilvolumens 2a trifft, wo er einen Teil des Bauteilmaterials verdampft.

Der Laserstrahl 4 wird solange weiter auf die Bauteiloberfläche gerichtet, bis er die linke Flanke erreicht. Dann wird der Laser 5 in der Zeichnung nach rechts bewegt, so dass der Laserstrahl 4 auf noch in dem Teilvolumen 2a vorhandenes Bauteilmaterial trifft, dass dann wiederum bis zur linken Flanke 3a verdampft wird. Auf diese Weise wird mit dem Laserstrahl 3 die gesamte Flanke 3a des Teilvolumen 2a abgefahren.

Nachdem das gesamte Teilvolumen 2a der Bohrung 2 auf diese Weise gefertigt worden ist, wird der Laser 5 gegen den Uhrzeigersinn gedreht und so ausgerichtet, dass der Laserstrahl 4 mit der rechten Flanke 3b einen Winkel größer 8° einschließt und zunächst auf den unmittelbar an die rechte Flanke 3b angrenzenden Bereich des rechten Teilvolumens 2b auftrifft, wo er einen Teil des Bauteilmaterials verdampft. Anschließend wird in der bereits beschriebenen Weise die rechte Flanke 3b mit dem Laserstrahl 4 abgefahren, um auch das rechte Teilvolumen 2b zu fertigen.

Während der Fertigung der Bohrung 2 kommt es zu keiner unzulässigen Wechselwirkung zwischen dem Laserstrahl 4 und einer der beiden Flanken 3a, 3b. Somit ist eine Beschädigung der Flanken der Bohrung ausgeschlossen.

Die Figur 4 zeigt das Bauteil 1 der Figur 1 in schematischer Darstellung, wobei hier eine alternative Bohrungsgeometrie angedeutet ist, die durch seitlich begrenzende Flanken 3a und 3b definiert wird. Bei der alternativen Bohrungsgeometrie sind die Teilvolumina 2a und 2b übereinander angeordnet, wobei das Teilvolumina 2b vorzugsweise mit der Spitze an die äußere Oberfläche des Bauteils 1 angrenzt, wobei das Teilvolumina 2b vorzugsweise mit der Spitze an die äußere Oberfläche des Bauteils 1 angrenzt.

Die alternative Bohrung 2 wird in der bereits geschilderten Weise gefertigt.

## Patentansprüche

1. Verfahren zur Fertigung einer Bohrung (2) mit seitlich begrenzenden Flanken (3a, 3b) in einem Bauteil (1),
bei dem ein Laserstrahl (4) auf die Bauteiloberfläche gerichtet wird, so dass Bauteilmaterial verdampft und die Bohrung (2) ausgebildet wird,
**dadurch gekennzeichnet, dass**
in mehreren Fertigungsschritten jeweils ein Teilvolumen (2a, 2b) der Bohrung (2) durch Abfahren einer seitlichen Flanke (3a, 3b) der Bohrung (2) mit dem Laserstrahl (4) ausgebildet wird,
wobei der Laserstrahl (4) so ausgerichtet wird, dass er mit der abgefahrenen Flanke (3a, 3b) einen Winkel von größer 8° einschließt.

2. Verfahren nach Anspruch 1,
**dadurch gekennzeichnet**, das
der Laserstrahl (4) so ausgerichtet ist, dass er mit der abgefahrenen Flanke (3a, 3b) einen Winkel von größer 10° und kleiner 90°, bevorzugt von größer 15° und kleiner 80° und besonders bevorzugt von größer 20° und kleiner 60° einschließt.

3. Verfahren nach einem der vorhergehenden Ansprüche,
**dadurch gekennzeichnet, dass**
ein gepulster Laserstrahl (4) auf die Bauteiloberfläche gerichtet wird.

4. Verfahren nach Anspruch 3,
**dadurch gekennzeichnet, dass**
ein Laserstrahl (4) mit variabler Pulsbreite auf die Bauteiloberfläche gerichtet wird.

5. Verfahren nach Anspruch 3 oder 4,
**dadurch gekennzeichnet, dass**
ein Laserstrahl (4) mit einer Pulsbreite im Bereich von 50 bis 800 ns, bevorzugt von 70 bis 600 ns und insbesondere von 200 bis 500 ns auf die Bauteiloberfläche gerichtet wird.

6. Verfahren nach einem der vorhergehenden Ansprüche,
**dadurch gekennzeichnet, dass**
ein Laserstrahl (4) mit einer Frequenz im Bereich von 20 bis 40 kHz, bevorzugt von 25 bis 35 kHz und insbesondere von 28 bis 32 kHz auf die Bauteiloberfläche gerichtet wird.

7. Verfahren nach einem der vorhergehenden Ansprüche,
**dadurch gekennzeichnet, dass**
eine Bohrung (2) in einem Turbinenbauteil ausgebildet wird.

8. Verfahren nach Anspruch 7,
**dadurch gekennzeichnet, dass**
eine Kühlluftbohrung in einer Turbinenschaufel ausgebildet wird.

9. Verfahren nach Anspruch 7,
**dadurch gekennzeichnet, dass**
eine Diffusoröffnung einer Kühlluftbohrung in einer Turbinenschaufel ausgebildet wird.

## Claims

1. Method for producing a hole (2), with side-delimiting flanks (3a, 3b), in a component (1),
in which a laser beam (4) is directed onto the component surface so that component material is vaporized and the hole (2) is formed,
**characterized in that**
a partial volume (2a, 2b) of the hole (2) is formed in a plurality of production steps in each case by tracing a side flank (3a, 3b) of the hole (2) with the laser beam (4), wherein the laser beam (4) is oriented so that it includes an angle of more than 8° with the traced flank (3a, 3b).

2. Method according to Claim 1,
**characterized in that**
the laser beam (4) is oriented so that it includes an angle of more than 10° and less than 90°, preferably of more than 15° and less than 80°, and especially preferably of more than 20° and less than 60°, with the traced flank (3a, 3b).

3. Method according to one of the preceding claims,
**characterized in that**
a pulsed laser beam (4) is directed onto the component surface.

4. Method according to Claim 3,
**characterized in that**
a laser beam (4) with variable pulse width is directed onto the component surface.

5. Method according to either of Claims 3 and 4,
**characterized in that**
a laser beam (4) with a pulse width in the range of 50 to 800 ns, preferably of 70 to 600 ns, and especially of 200 to 500 ns, is directed onto the component surface.

6. Method according to one of the preceding claims,
**characterized in that**
a laser beam (4) with a frequency in the range of 20 to 40 kHz, preferably of 25 to 35 kHz, and especially of 28 to 32 kHz, is directed onto the component surface.

7. Method according to one of the preceding claims,
**characterized in that**
a hole (2) is formed in a turbine component.

8. Method according to Claim 7,
**characterized in that**
a cooling air hole is formed in a turbine blade.

9. Method according to Claim 7,
**characterized in that**
a diffuser opening of a cooling air hole is formed in a turbine blade.

## Revendications

1. Procédé de perçage d'un trou ( 2 ) ayant des flancs ( 3a, 3b) de délimitation latérale dans un élément (1), dans lequel on dirige un faisceau ( 4 ) laser sur la surface de l'élément, de manière à faire fondre du matériau de l'élément et à former le trou ( 2 ),
**caractérisé en ce que**
dans plusieurs stades de perçage, on forme respectivement un volume ( 2a, 2b ) partiel du trou ( 2 ) en enlevant un flanc ( 3a, 3b ) latéral du trou ( 2 ) par le faisceau ( 4 ) laser, dans lequel on dirige le faisceau ( 4 ) laser, de manière à ce qu'il fasse un angle plus grand que 8° avec le flanc ( 3a, 3b ) enlevé.

2. Procédé suivant la revendication 1,
**caractérisé en ce que**
on dirige le faisceau ( 4 ) laser, de manière à ce qu'il fasse avec le flanc ( 3a, 3b ) enlevé un angle plus grand que 10° et plus petit que 90°, de préférence plus grand que 15° et plus petit que 80°, et d'une manière particulièrement préférée plus grand que 20° et plus petit que 60°.

3. Procédé suivant l'une des revendications précédentes,
**caractérisé en ce que**
on dirige un faisceau (4) laser pulsé sur la surface de l'élément.

4. Procédé suivant la revendication 3,
**caractérisé en ce que**
on dirige sur la surface de l'élément un faisceau ( 4 ) laser de largeur d'impulsion variable.

5. Procédé suivant la revendication 3 ou 4,
**caractérisé en ce que**
on dirige sur la surface de l'élément un faisceau ( 4 ) laser d'une largeur d'impulsion comprise entre 50 et 800 ns, de préférence allant de 70 à 600 ns, et notamment allant de 200 à 500 ns.

6. Procédé suivant l'une des revendications précédentes,
**caractérisé en ce que**
on dirige sur la surface de l'élément un faisceau ( 4 ) laser ayant une fréquence comprise entre 20 et 400 kHz, de préférence allant de 25 à 35 kHz, et notamment allant de 28 à 32 kHz.

7. Procédé suivant l'une des revendications précédentes,
**caractérisé en ce que**
on forme un trou ( 2 ) dans un élément de turbine.

8. Procédé suivant la revendication 7,
**caractérisé en ce que**
on forme un trou pour de l'air de refroidissement dans une aube de turbine.

9. Procédé suivant la revendication 7,
**caractérisé en ce que**
on forme une ouverture de diffuseur d'un trou de refroidissement d'air dans une aube de turbine.
